# EUROPÄISCHE PATENTSCHRIFT

(11) **EP 4 279 738 B1**
(45) Veröffentlichungstag und Bekanntmachung des Hinweises auf die Patenterteilung: **19.02.2025**
(21) Anmeldenummer: 23000071.3
(22) Anmeldetag: 10.05.2023
(51) Int. Cl.: F04B 35/04, F04B 49/06, F15B 11/06, F15B 11/08, F15B 21/08

(54) **PNEUMATISCHE BETÄTIGUNGSVORRICHTUNG UND EINHEIT**
PNEUMATIC ACTUATOR AND ASSEMBLY
ACTIONNEUR PNEUMATIQUE ET UNITÉ

(30) Priorität: 18.05.2022 DE 102022001747
(43) Veröffentlichungstag der Anmeldung: 22.11.2023
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- DE-A1- 102005 016 719
- DE-A1- 102009 037 120
- DE-A1- 102016 116 281
- DE-A1- 102017 009 374

## Beschreibung

Die Erfindung betrifft eine pneumatische Betätigungsvorrichtung für pneumatisch betätigte Vorrichtungen sowie eine pneumatische Einheit mit einer derartigen pneumatischen Betätigungsvorrichtung und mit einer pneumatisch betätigten Vorrichtung, die mindestens einen Druckraum aufweist.

Aus der DE 20 2006 008 219 U1 ist ein Minikompressor bekannt. Dieser wird beim Anschluss an eine Spannungsquelle eigeschaltet und beim Trennen der Spannungsquelle abgeschaltet. Das Dokument DE 10 2009 037120 A1 offenbart eine pneumatische Betätigungsvorrichtung für pneumatisch betätigte Vorrichtungen, umfassend eine Steuerungsbaugruppe welche einen einen Verdichter antreibenden elektrischen Motor steuert.

Der vorliegenden Erfindung liegt die Problemstellung zugrunde, eine Betätigungsvorrichtung zum Betrieb in einer pneumatischen Einheit zu entwickeln, wobei die Betätigungsvorrichtung ohne Umbauten zusammen mit unterschiedlich aufgebauten pneumatisch betätigten Vorrichtungen einsetzbar ist.

Diese Problemstellung wird mit den Merkmalen des Hauptanspruches gelöst. Dazu steuert eine Steuerungsbaugruppe zumindest mittels eines Druckschalters und eines mit diesem elektrisch in Reihe geschalteten Temperaturschalters einen, einen Verdichter antreibenden elektrischen Motor. Mindestens ein, mittels eines in oder an der Steuerungsbaugruppe angeordneten Ventilschalters schaltbares Wegeventil mit einer federbelasteten Sperrstellung ist elektromagnetisch betätigbar. Außerdem ist das Volumen einer Druckleitung zwischen dem Verdichter und dem Wegeventil kleiner als 500 Kubikmillimeter.

In der pneumatischen Einheit ist jeder Druckraum mittels eines Kolbens begrenzt. Mindestens ein Druckausgang der Betätigungsvorrichtung und mindestens ein Druckraum sind mittels einer Verbindungsleitung verbunden. Außerdem ist die Summe der Volumina der Verbindungsleitung und mindestens eines Druckraums größer ist als das Zehnfache des Volumens der Druckleitung.

Die pneumatische Betätigungsvorrichtung hat ein geringes Speichervolumen. Jedes Öffnen des Wegeventils erfolgt über die Steuerungsbaugruppe. Das beim Öffnen des Wegeventils vergrößerte temporäre Volumen des pneumatischen Systems führt zu einem Absinken des Drucks. Sobald der mittels des Druckschalters geprüfte Druck einen unteren Schaltpunkt erreicht hat, prüft die Steuerungsbaugruppe den Schaltzustand des Thermoschalters. Abhängig vom kumulativen Ergebnis der beiden Prüfungen wird mittels der Steuerungsbaugruppe der Motor für den Verdichter gestartet. Die Steuerungsbaugruppe kann eingesetzt werden, um die Parameter der Betätigungsvorrichtung und die Parameter des Betriebsverfahrens der Vorrichtung, z.B. die Druckaufbaukurve, die Ventilschaltverzögerung, etc. einzustellen. Damit kann die Betätigungsvorrichtung schnell und problemlos an eine pneumatisch betätigte Vorrichtung angeschlossen werden.

Weitere Einzelheiten der Erfindung ergeben sich aus den Unteransprüchen und der nachfolgenden Beschreibung schematisch dargestellter Ausführungsformen.
- Figur 1:: Pneumatische Betätigungsvorrichtung;
- Figur 2:: Draufsicht auf die geöffnete Betätigungsvorrichtung;
- Figur 3:: Pneumatischen Einheit mit Linearklemmvorrichtung;
- Figur 4:: Steuerungsbaugruppe;
- Figur 5:: Linearklemmvorrichtung im geschlossenen Zustand;
- Figur 6:: Linearklemmvorrichtung im gelüfteten Zustand;
- Figur 7:: Pneumatische Einheit mit Nullpunktspannsystem;
- Figur 8:: Nullpunktspannsystem im drucklos geschlossenen Zustand;
- Figur 9:: Nullpunktspannsystem mit verriegeltem Kombibolzen;
- Figur 10:: Pneumatische Einheit mit einer Zylinder-Kolben-Einheit.
- Figur 11:: Pneumatische Einheit mit innenliegenden Ventilschaltern.

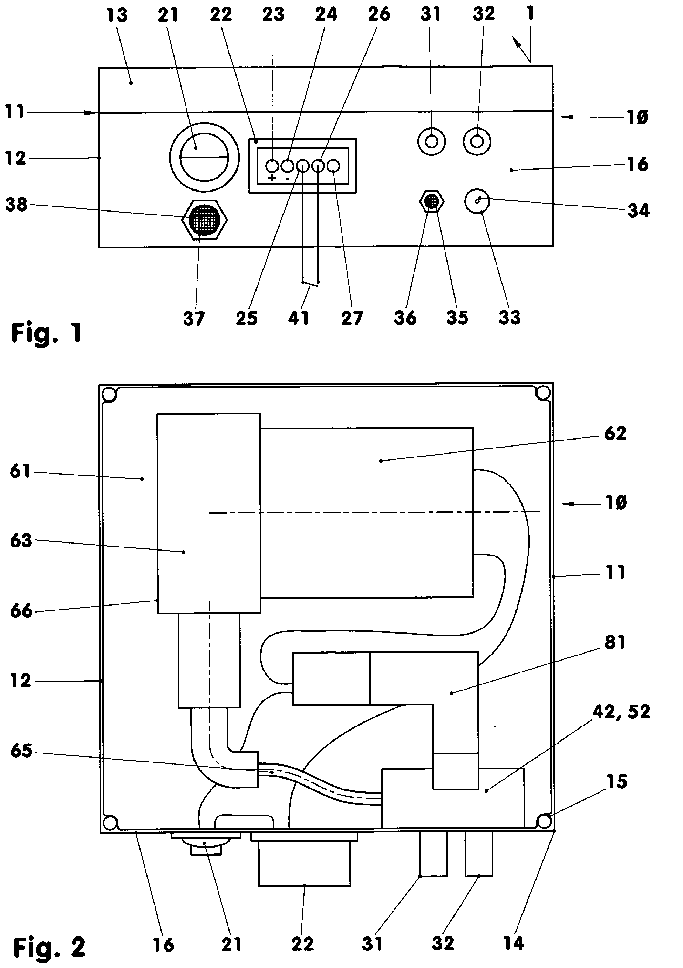

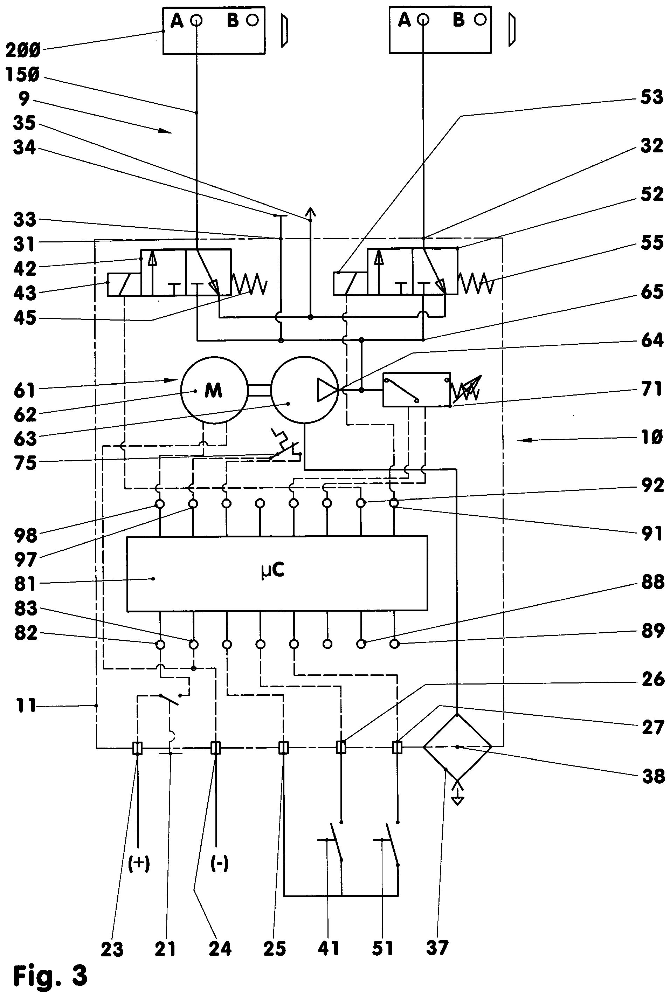

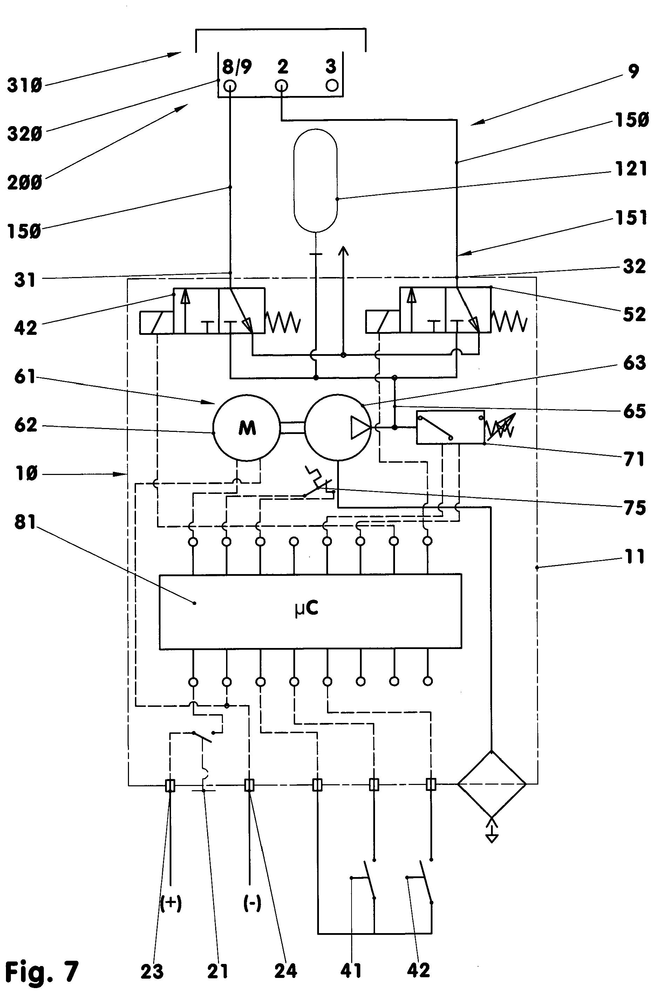

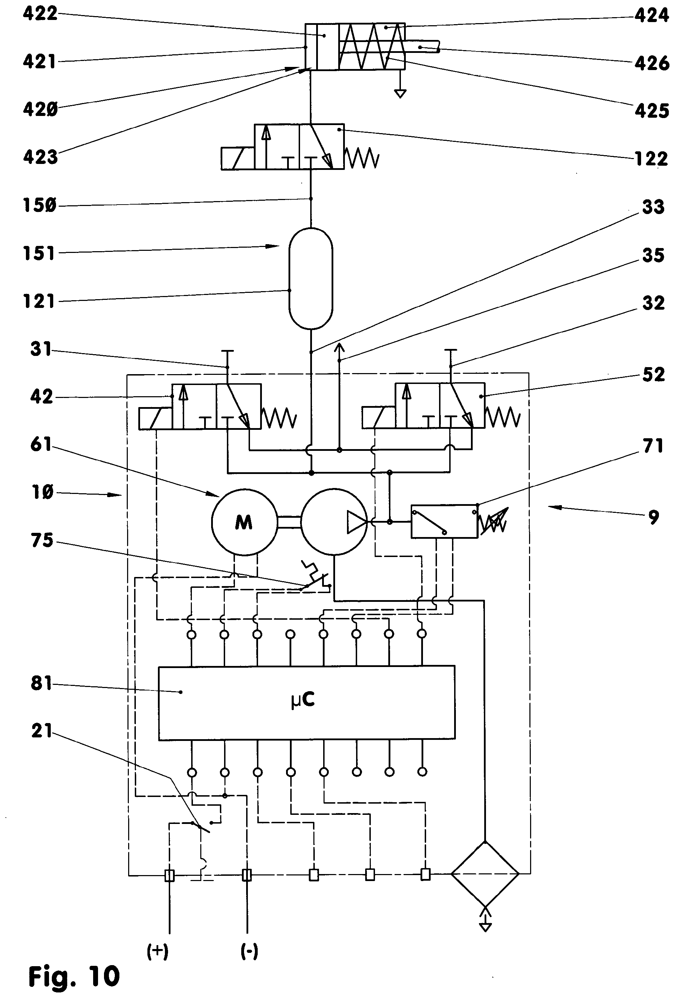

Die Figuren 1 und 2 zeigen eine pneumatische Betätigungsvorrichtung (10). Derartige Betätigungsvorrichtungen (10) werden beispielsweise eingesetzt, um pneumatisch betätigte Vorrichtungen (200) zu betätigen. Die einzelne pneumatisch betätigte Vorrichtung (200) kann monostabil oder bistabil ausgebildet sein. Pneumatisch betätigte Vorrichtungen (200) sind beispielsweise Brems- und/oder Klemmvorrichtungen (220), vgl. die Figuren 3 - 6, Greifvorrichtungen oder Spannvorrichtungen (320), vgl. die Figuren 7 - 9, Zylinder-Kolben-Einheiten (420), vgl. Figur 10.

Bei der Betätigung einer monostabil ausgebildeten pneumatisch betätigten Vorrichtung (200), vgl. Figur 10, wird ein mittels eines verschiebbaren Kolbens (422) begrenzter Druck- oder Verdrängungsraum (423) entgegen der Kraft einer z.B. mechanischen Rückstellfeder (425) belastet. Eine bistabil ausgebildete Vorrichtung (200) hat beispielsweise zwei, mittels eines Kolbens getrennte Druckräume, die alternativ mit pneumatischem Druck beaufschlagt werden.

Brems- und/oder Klemmvorrichtungen (220) oder Spannvorrichtungen (320) werden z.B. in Werkzeugmaschinen eigesetzt, um Führungen oder Werkstücke beispielsweise relativ zum Maschinenbett in einer Position zu halten. Dieses Halten wird z.B. mittels der mechanischen Feder (235, 243; 342) des Brems-, Klemm- oder Spannelements sichergestellt.

Eine Greifvorrichtung kann entweder monostabil oder bistabil ausgebildet sein. Eine monostabile Greifvorrichtung hat beispielsweise eine in die geschlossene Greifposition wirkende Rückstellfeder, die den Greifdruck beim Greifen eines Greifguts sichert. Bei einer bistabilen Greifvorrichtung wird zeitlich alternativ eine Öffnungsbewegung oder eine Schließbewegung pneumatisch betätigt.

Die in den Figuren 1 und 2 dargestellte pneumatische Betätigungsvorrichtung (10) hat ein Gehäuse (11), das aus einem Bodenteil (12) und ein mit diesem verschraubten Deckelteil (13) besteht. Das Gehäuse (11) hat eine z.B. quadratische Grundfläche mit einer Kantenlänge von beispielsweise 150 Millimetern. Die Höhe des Gehäuses (11) beträgt z.B. 60 Millimeter. An jeder Ecke (14) des Bodenteils (12) befindet sich eine Gewindebohrung (15), in die bei geschlossenem Gehäuse (11) eine Deckelbefestigungsschraube eingeschraubt ist.

Im Ausführungsbeispiel sind sämtliche externen Anschlüsse und Bedienungselemente an der Rückseite (16) des Gehäuses (11) angeordnet. Links ist ein Hauptschalter (21) angeordnet. Mittig ist eine elektrische Anschlussschiene (22) angeordnet. In der Darstellung der Figur 1 dienen die beiden linken elektrischen Anschlüsse (23, 24) der Anschlussschiene (22) zum Anschluss einer Stromquelle. Die Stromquelle ist beispielsweise eine Gleichstromquelle mit einer Spannung von z.B. 24 Volt. Hierbei ist beispielsweise der linke Anschluss der Potentialanschluss (23) und der rechte Anschluss der Masseanschluss (24). Die weiteren elektrischen Anschlüsse (25 - 27) sind im Ausführungsbeispiel ein Potentialausgangsanschluss (25) und zwei Ventilschaltanschlüsse (26, 27). Der Potentialausgangsanschluss (25) kann gegenüber der elektrischen Masse das Potential der Gleichstromquelle oder ein anderes elektrisches Potential aufweisen. Die beiden Ventilschaltanschlüsse (26, 27) sind beispielsweise bei Nichtbelegung potentialfrei. In den Darstellungen der Figuren 1 und 3 ist zwischen dem Potentialausgangsanschluss (25) und dem ersten Ventilschaltanschluss (26) ein erster Ventilschalter (41) angeordnet. Dieser Ventilschalter (41) kann manuell oder programmgesteuert betätigt werden. Bei einer programmgesteuerten Betätigung kann die Betätigung beispielsweise mittels einer übergeordneten Steuerung, z.B. einer speicherprogrammierbaren Steuerung, erfolgen. Der Ventilschalter (41) kann auch - z.B. bei programmgesteuerter Betätigung - innerhalb des Gehäuses (11) angeordnet sein. Ein zweiter Ventilschalter (51) ist im Schaltplan der Figur 3 zwischen dem Potentialausgangsanschluss (25) und einem zweiten Ventilschaltanschluss (27) angeordnet. Dieser zweite Ventilschalter (51) kann so ausgebildet und angeordnet sein wie der erste Ventilschalter (41). Bei Anordnung der Ventilschalter (41, 51) innerhalb des Gehäuses (11) können die außenliegenden Ventilschalter (41, 51) entfallen. In diesem Fall können auch der Potentialausgangsanschluss (25) und die Ventilschaltanschlüsse (26, 27) entfallen.

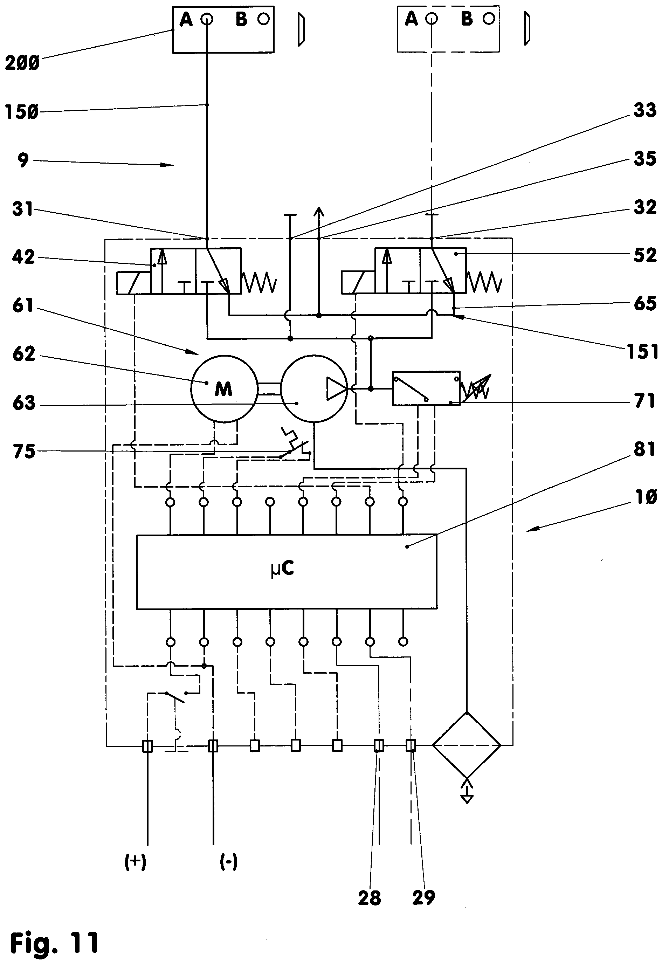

Das Gehäuse (11) kann Datenanschlüsse (28) und/oder Signalanschlüsse (29) aufweisen, vgl. Figur 11. Über diese Anschlüsse können Daten und/oder Signale beispielsweise mit einer übergeordneten Steuerung ausgetauscht werden. Der Signalaustausch kann in beide Richtungen erfolgen.

An der Rückseite (16) des Gehäuses (11) sind im Ausführungsbeispiel drei pneumatische Druckausgänge (31 - 33) angeordnet. Ein erster Druckausgang (31) ist einem ersten elektromagnetisch betätigten Wegeventil (42) nachgeschaltet. Ein zweiter Druckausgang (32) ist einem zweiten elektromagnetisch betätigten Wegeventil (52) nachgeschaltet. Der dritte Druckausgang (33) ist beispielsweise ohne vorgeschaltetes Wegeventil ausgebildet. Im Ausführungsbeispiel der Figuren 1 - 6 ist der dritte Druckausgang (33) mittels eines Verschlusselements (34) verschlossen. Auch eine Ausführung mit nur einem Druckausgang (31; 32; 33) ist denkbar. Dieser ist dann so ausgebildet wie der genannte erste Druckausgang (31).

Unterhalb des ersten Druckanschlusses (31) und des zweiten Druckanschlusses (32) ist in der Darstellung der Figur 1 ein Entlüftungsausgang (35) angeordnet. Dieser weist z.B. ein Schutzfilter (36) auf.

Im linken Bereich der Rückseite (16) ist in der Darstellung der Figur 1 ein Ansauganschluss (37) angeordnet. Dieser hat ein Ansaugfilter (38), der das Ansaugen von Verunreinigungen verhindert.

Innerhalb des Gehäuses (11) sind im Ausführungsbeispiel eine Verdichtereinheit (61), ein Druckschalter (71), ein Temperaturschalter (75), die zwei elektromagnetisch betätigte Wegeventile (42, 52) und eine Steuerungsbaugruppe (81) angeordnet.

Die Verdichtereinheit (61) weist einen elektrischen Motor (62) und einen pneumatischen Verdichter (63) auf. Sie hat eine Anschlussleistung von beispielsweise 120 Watt. Ihr Prüfdruck beträgt im Ausführungsbeispiel 10 Bar. Ein Volumen von 10⁶ Kubikmillimeter wird z.B. innerhalb von 40 Sekunden vom Umgebungsdruck auf 0,6 Megapascal erhöht. Der Verdichter (63) ist im Ausführungsbeispiel ein Kolbenverdichter. Sein Durchfluss beim angegebenen Druck beträgt z.B. 8,44 Pascal mal Kubikmeter durch Sekunde [Pa × m³/s].

An der Saugseite des Verdichters (63) ist der Ansauganschluss (37) mit dem Ansaugfilter (38) angeschlossen. Hiermit saugt der mittels des Elektromotors (62) betriebene Verdichter (63) Luft aus der Umgebung (1) an. Die verdichtete Luft wird auf der Druckseite (64) des Verdichters (63) in eine Druckleitung (65) gefördert.

Auf der Druckseite (64) des Verdichters (63) sitzt der Druckschalter (71). Der Druckschalter (71) hat einen oberen Schaltpunkt und einen unteren Schaltpunkt. Der Druckwert des oberen Schaltpunktes und/oder des unteren Schaltpunktes kann einstellbar ausgebildet sein. Zur Verstellung des unteren Schaltpunkts kann die Hysterese des Druckschalters verstellbar ausgebildet sein. Im Ausführungsbeispiel ist der Druckwert des unteren Schaltpunktes größer als der Umgebungsdruck. Er ist beispielsweise auch größer oder gleich der Hälfte des Druckwertes des oberen Schaltpunktes. Beispielsweise ist der obere Schaltwert auf 0,6 Pascal und der untere Schaltpunkt auf 0,3 Pascal eingestellt. Der Druckschalter (71) ist geschlossen, wenn der ermittelte zunehmende Druck kleiner ist als der Druckwert des oberen Schaltpunktes ist. Wird dieser Druckwert überschritten, wird der Druckschalter (71) geöffnet. Der Druckschalter (71) kann zusätzlich ein druckabhängiges Signal ausgeben. Dies ist beispielsweise ein analoges Signal zwischen 4 Milliampère und 20 Milliampère. Damit kann der Ist-Druck überwacht werden.

Am Verdichtergehäuse (66) der Verdichtereinheit (61) ist der Temperaturschalter (75) angebracht. Der Schaltpunkt des Temperaturschalters (75) beträgt beispielsweise 55 Grad Celsius. Dieser Schaltwert sowie die Hysterese des Temperaturschalters (75) können einstellbar sein. Der Temperaturschalter (75) ist z.B. bei Raumtemperatur geschlossen. Bei Überschreiten des Schaltpunktes öffnet der Temperaturschalter (75), so dass ein über ihn geführter Stromkreis unterbrochen wird. Der Temperaturschalter (75) kann ein temperaturabhängiges z.B. analoges Signal ausgeben.

Die beiden elektromagnetisch betätigten Wegeventile (42, 52) sind im Ausführungsbeispiel identisch zueinander ausgebildet. Die Wegeventile (42, 52) sind pneumatisch parallel zueinander geschaltet. Sie sind z.B. als 3/2-Wegeventile mit Federrückstellung in die Sperrstellung ausgebildet. Auch ein anderer Aufbau der Wegeventile (42, 52) ist denkbar. Das einzelne Wegeventil (42; 52) ist in der Betriebsstellung mittels der pneumatischen Leitung mit der Druckseite (64) des Verdichters (63) verbunden. Damit ist das einzelne Wegeventil (42; 52) pneumatisch parallel zum Druckschalter (71) angeordnet. In der Sperrstellung ist das Wegeventil (42; 52) mit dem Entlüftungsausgang (35) verbunden. Die andere Seite des Wegeventils (42; 52) ist in beiden Schaltstellungen mit einem Druckausgang (31; 32) des Gehäuses (11) verbunden. Der dritte Druckausgang (33) ist ohne Zwischenschaltung eines Wegeventils (31; 32) mit der Druckseite (64) des Verdichters (63) verbunden.

Die Steuerungsbaugruppe (81) ist zwischen den genannten Komponenten und den elektrischen Anschlüssen (23 - 27) sowie beispielsweise den Daten- und Signalanschlüssen (28, 29) der Rückseite (16) des Gehäuses (11) angeordnet. Sie kann eine oder mehrere Platinen aufweisen. Diese können aneinander angrenzend oder beabstandet zueinander im Gehäuse (11) angeordnet sein. Die dargestellte Steuerungsbaugruppe (81), vgl. die Figuren 3, 4, 7, 10 und 11, hat beispielsweise 16 Anschlüsse (82 - 98), von denen im ersten Ausführungsbeispiel 12 Anschlüsse (82 - 86, 91 - 94, 96 - 98) belegt sind.

Der erste Anschluss (82) ist ein Potentialeingangsanschluss (82). Dieser liegt elektrisch hinter dem Hauptschalter (21). Der zweite Anschluss (83) ist ein Massenanschluss (83). Dieser zweite Anschluss (83) verbindet die Steuerungsbaugruppe (81) elektrisch mit dem Massenanschluss (24) des Gehäuses (11). Der Masseanschluss (24) des Gehäuses (11) dient auch z.B. als Sternpunkt der übrigen Masseleitungen innerhalb des Gehäuses (11).

Der dritte Anschluss (84) der Steuerungsbaugruppe (81) ist im Ausführungsbeispiel mit dem Potentialausgangsanschluss (25) des Gehäuses (11) verbunden. Das Potential dieses Potentialausgangsanschlusses (25) entspricht beispielsweise dem für die Betätigung der Wegeventile erforderlichen elektrischen Potential, z.B. 5 Volt, 12 Volt oder 24 Volt. Der erforderliche Spannungswert kann einstellbar sein.

Der vierte Anschluss (85) der Steuerungsbaugruppe (81) ist mit dem ersten Ventilschaltanschluss (26) des Gehäuses (11) verbunden. Der fünfte Anschluss (86) ist mit dem zweiten Ventilschaltanschluss (27) des Gehäuses (11) verbunden.

Der sechste Anschluss (87) ist ein Datenanschluss (87). Über diesen Datenanschluss (87) können Daten z.B. zwischen einer übergeordneten Steuerung und der pneumatischen Betätigungsvorrichtung (10) z.B. bidirektional ausgetauscht werden. Beim Einsatz ist dieser Datenanschluss (87) beispielsweise mit einer Datenanschlussmuffe (28) an der Rückseite (16) des Gehäuses (11) verbunden. Dieser sechste Anschluss (87) ist im Ausführungsbeispiel nicht belegt. Anstatt des sechsten Anschlusses kann auch eine drahtlose Sende-/Empfangsvorrichtung in der Steuerungsbaugruppe (81) vorgesehen sein. Es ist auch denkbar, z.B. die Datenanschlüsse für eingehende und abgehende Daten getrennt auszubilden. Die Daten können hierbei z.B. paketartig übertragen werden. Sie umfassen z.B. die Druckwerte für die Schaltwerte des Druckschalters (71) und des Temperaturschalters (85), den zeitlichen Verlauf der Motorspannung des elektrischen Motors (62) und/oder des Volumenstroms des Verdichters (63), Schaltzeitpunkte für die Wegeventile (42; 52), den zeitlichen Verkauf einer Drosselkurve eines gegebenenfalls vor dem Entlüftungsausgang (35) angeordneten Drosselventils, etc.

Der siebte Anschluss (88) der Steuerungsbaugruppe (81) ist ein Signalanschluss (88). Er kann mit der Signalanschlussmuffe (29) des Gehäuses (11) verbunden sein. Dieser Signalanschluss (88) wird beispielsweise eingesetzt, um z.B. von einer übergeordneten Steuerung aus binäre Startsignale an die pneumatische Betätigungsvorrichtung (10) zu übertragen. Damit können beispielsweise in der Steuerungsbaugruppe (81) Ablaufprogramme gestartet werden oder unterbrochen werden. Weiterhin kann über den Signalanschluss (88) ein z.B. binäres Signal über die Beendigung eines Programmablaufs an die übergeordnete Steuerung übertragen werden. Es ist auch denkbar, Signalanschlüsse für eingehende und ausgehende Signale getrennt voneinander auszubilden. Auch eine drahtlose Übertragung der Signale ist denkbar. Im Ausführungsbeispiel ist der siebte Anschluss (88) nicht belegt.

Der achte Anschluss (89) der Steuerungsbaugruppe (81) ist im Ausführungsbeispiel ein Reserveanschluss (89). An diesen Anschluss (89) kann beispielsweise eine verstellbare Drossel für den Rücklauf der Luft angeschlossen werden.

Der neunte Anschluss (91) ist ein zweiter Ventilanschluss (91). An diesen neunten Anschluss ist die Ventilspule (53) des zweiten Wegeventils (52) angeschlossen. An den zehnten Anschluss (92), einen ersten Ventilanschluss (92), ist die Ventilspule (43) des ersten Wegeventils (42) angeschlossen.

Der elfte Anschluss (93) und der zwölfte Anschluss (94) werden zum Anschluss des Druckschalters (71) eingesetzt. Hierbei ist z.B. der elfte Anschluss (93) der Eingangsanschluss (93) des Druckschalters (71). Der zwölfte Anschluss (94) ist der Betriebsanschluss (94). Dieser Anschluss (94) ist im Druckschalter (71) mit dem Eingangsanschluss (93) verbunden, wenn z.B. der Druck auf der Druckseite (64) des Verdichters (63) vor Anlauf des Verdichters (63) geringer ist als der Wert des unteren Schaltpunktes. Beim Betrieb der Verdichtereinheit (61) verbleibt der Druckschalter (71) in dieser geschlossenen Stellung, solange der Druck auf der Druckseite (64) geringer ist als der Druckwert des oberen Schaltpunktes des Druckschalters (71).

Der dreizehnte Anschluss (95) ist ein Datenanschluss (95). Über diesen Datenanschluss (95) kann beispielsweise der Druckschalter (71) und/oder der Temperaturschalter (75) eingestellt werden. Auch können beispielsweise analoge Daten des Druckschalters (71) und/oder des Temperaturschalters (75) mit der Steuerungsbaugruppe (81) ausgetauscht werden.

An den vierzehnten Anschluss (96) und an den fünfzehnten Anschluss (97) ist der Temperaturschalter (75) angeschlossen. Der Temperaturschalter (75) ist hierbei in Reihe mit dem Druckschalter (71) geschaltet.

Der fünfzehnte Anschluss (97) steuert den sechzehnten Anschluss (98), der ein Motorsteueranschluss (98) ist. Der Druckschalter (71) und der Temperaturschalter (75) sind Teile eines Motorsteuerkreises (99), der den elektrischen Motor (62) ansteuert. Bei einem unterbrochenen Motorsteuerkreis (99) ist der Motorsteueranschluss (98) spannungslos. Der Motorsteuerkreis (99) ist unterbrochen, wenn entweder der am Druckschalter (71) ermittelte Druck den oberen Schaltpunkt erreicht hat und/oder die am Temperaturschalter (75) ermittelte Temperatur (75) den Temperaturgrenzwert überschritten hat. Jeder der beiden Schalter (71, 75) verbleibt während der abfallenden Hysterese im geöffneten Zustand. Ein Einschalten des Motorstroms erfolgt nur, wenn sowohl der Druckschalter (71) als auch der Temperaturschalter (75) geschlossen sind.

Auch eine andere Belegung der Anschlüsse (82 - 98) ist denkbar.

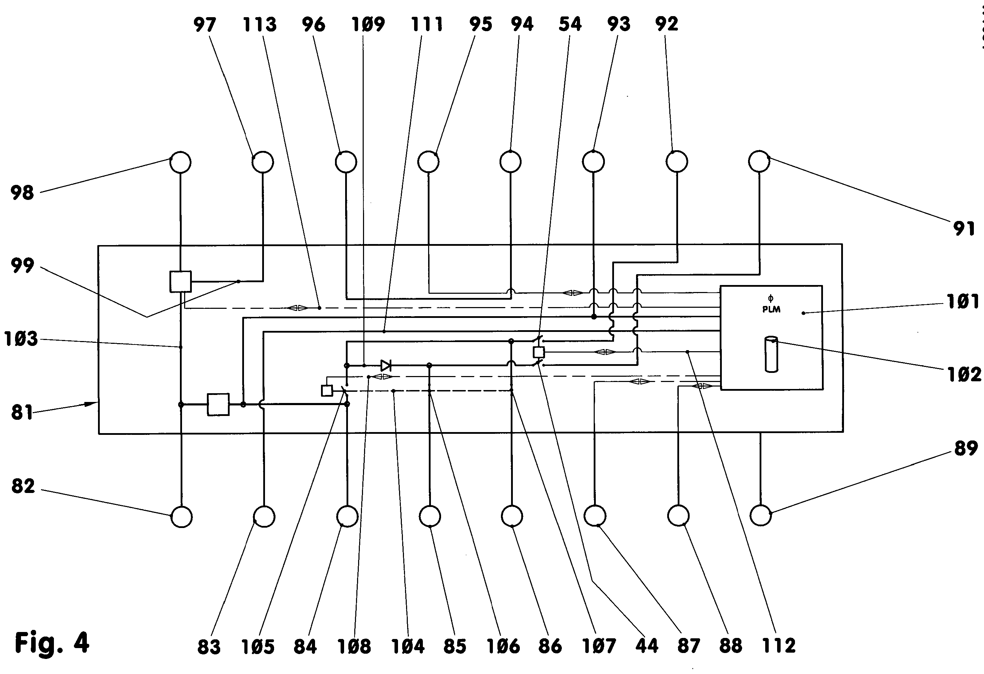

Die Steuerungsbaugruppe (81) ist im Ausführungsbeispiel als Mikrocontroller ausgebildet. Die Figur 4 zeigt vereinfacht den Aufbau der Steuerungsbaugruppe (81). Die Steuerungsbaugruppe (81) weist beispielsweise eine Rechner- und Speichereinheit (101) zur Regelung und/oder Steuerung der einzelnen Funktionen der pneumatischen Betätigungsvorrichtung (10) auf. In der Darstellung der Figur 4 ist Rechner- und Speichereinheit (101) als programmierbarer Logik-Baustein (PLD) mit Speicher (102) dargestellt. Die Rechner- und Speichereinheit (101) ist dafür ausgelegt, Daten und Signale zu verarbeiten, die von außerhalb der pneumatischen Betätigungsvorrichtung (10) an diese übertragen werden. Auch kann sie Daten und Signale von der pneumatischen Betätigungsvorrichtung (10) beispielsweise an eine übergeordnete Steuerung, eine mobile Programmiereinheit, etc. übertragen.

Der Speicher (102) ist z.B. als Daten- und Ablaufprogrammspeicher ausgebildet. Beispielsweise sind im Speicher (102) eine Vielzahl von Ablaufprogrammen gespeichert. Die Rechner- und Speichereinheit (101) kann z.B. ein vorgegebenes Ablaufprogramm aus einer Vielzahl gespeicherter Ablaufprogramme starten. Ein derartiges Ablaufprogramm enthält beispielsweise als Parameter jeweils zumindest eine Motorspannungskurve, einen Druckwert für den oberen Schaltpunkt des Druckschalters (71), einen Druckwert für den unteren Schaltpunkt oder einen Wert für die Hysterese des Druckschalters (71) und einen Grenztemperaturwert für den Temperaturschalter (75) sowie dessen Hysterese. Bei der Steuerung der Motorspannungskurve wird beispielsweise die Spannung in der elektrischen Verbindung (103) zwischen dem Potentialeingangsanschluss (82) und dem Motorsteueranschluss (98) und damit die Drehzahl der Verdichtereinheit (61) beeinflusst. Die Datenübertragung erfolgt hierbei z.B. über eine Motorsteuerleitung (113) von der Rechner- und Speichereinheit (101) aus. Hierbei erfolgt die Steuerung des elektrischen Motors (62) sowohl mittels des Motorsteuerkreises (99) als auch mittels der Rechner- und Speichereinheit (101). Es ist auch denkbar, die Druckaufbauzeit, den Luftdurchfluss, die Druckaufbaukurve, etc. zu steuern.

Die in der Figur 4 dargestellte Steuerungsbaugruppe (81) verfügt im Bereich der Ventilansteuerung über einen Dreifachschalter (104) und zwei innere Ventilschalter (44, 54). Der Dreifachschalter (104) ist in den Leitungen des dritten Anschlusses (84) bis zum fünften Anschluss (86) angeordnet. Hierbei sind die Schaltelemente (106, 107) in den Leitungen des vierten und fünften Anschlusses (85, 86) gegenläufig zum Schaltelement (105) des dritten Anschlusses (84) ausgebildet. Damit werden beim Schließen des ersten Schaltelements (105) die beiden anderen Schaltelemente (106, 107) geöffnet und umgekehrt. In der Darstellung der Figur 4 ist das erste Schaltelement (105) im geöffneten Zustand dargestellt. Der Dreifachschalter (104) ist mittels der Rechner- und Speichereinheit (101) betätigbar. Hierzu wird z.B. eine Signalleitung (108) eingesetzt.

Dem Dreifachschalter (104) ist eine Diodenbrücke (109) nachgeschaltet. Diese verbindet die Leitung des dritten Anschlusses (84) mit der Leitung des vierten Anschlusses (85). Außerdem verbindet eine dem Dreifachschalter (104) nachgeschaltete Leitungsbrücke (111) die Leitung des dritten Anschlusses (84) mit der Leitung des fünften Anschlusses (86).

Dem zweiten Schaltelement (106) ist ein innerer erster Ventilschalter (44) nachgeschaltet. Dieser wird mittels der Rechner- und Speichereinheit (101) über eine Ventilschaltleitung (112) betätigt. Ein zweiter innerer Ventilschalter (54) ist dem dritten Schaltelement (107) nachgeschaltet. Auch der zweite innere Ventilschalter (54) ist von der Rechner- und Speichereinheit (101) über die Ventilschaltleitung (112) betätigbar. Das Schalten der beiden inneren Ventilschalter (44, 54) kann gleichzeitig oder zeitlich versetzt zueinander erfolgen. Auch ist es denkbar, nur einen der inneren Ventilschalter (44; 54) zu betätigen.

Dem Hauptschalter (21) sind in der Steuerungsbaugruppe (81), vgl. Figur 4, der Druckschalter (71) und der mindestens eine Ventilschalter (41; 44; 51; 54) elektrisch parallel zueinander nachgeschaltet. Bei geöffnetem ersten Schaltelement (104) sind die beiden - zur Verdeutlichung offen dargestellten - inneren Ventilschalter (44, 54) im Allgemeinen geschlossen.

Die Druckleitung (65) zwischen dem Verdichter (63) und den Wegeventilen (42, 52) hat im Ausführungsbeispiel eine Länge von 70 Millimetern und einen Außendurchmesser von vier Millimetern. Der Innendurchmesser der Druckleitung (65) beträgt z.B. 2,5 Millimeter. Damit beträgt das in der Druckleitung (65) zwischen dem Verdichter (63) und dem mindestens einen pneumatischen Wegeventil (42; 52) eingeschlossene Volumen 344 Kubikmillimeter. Das eingeschlossene Volumen der Druckleitung (65) ist beispielsweise kleiner als 500 Kubikmillimeter. Die Druckausgänge (31 - 33) können für Leitungsquerschnitte ausgelegt sein, die gleich oder größer dem Querschnitt der Druckleitung (65) sind.

Die pneumatische Betätigungsvorrichtung (10) wird unabhängig vom Druckluftnetz z.B. einer Fertigungshalle betrieben. Sie kann beispielsweise an einer Werkzeugmaschine, einem Industrieroboter, etc. beispielsweise in einem ungefährdeten Bereich angeordnet werden. Eine pneumatische Verbindungsleitung (150) verbindet die pneumatische Betätigungsvorrichtung (10) mit einer pneumatisch betätigten Vorrichtung (200). Die Betätigungsvorrichtung (10) und die betätigte Vorrichtung (200) sowie die Verbindungsleitung (150) bilden zusammen eine pneumatische Einheit (9).

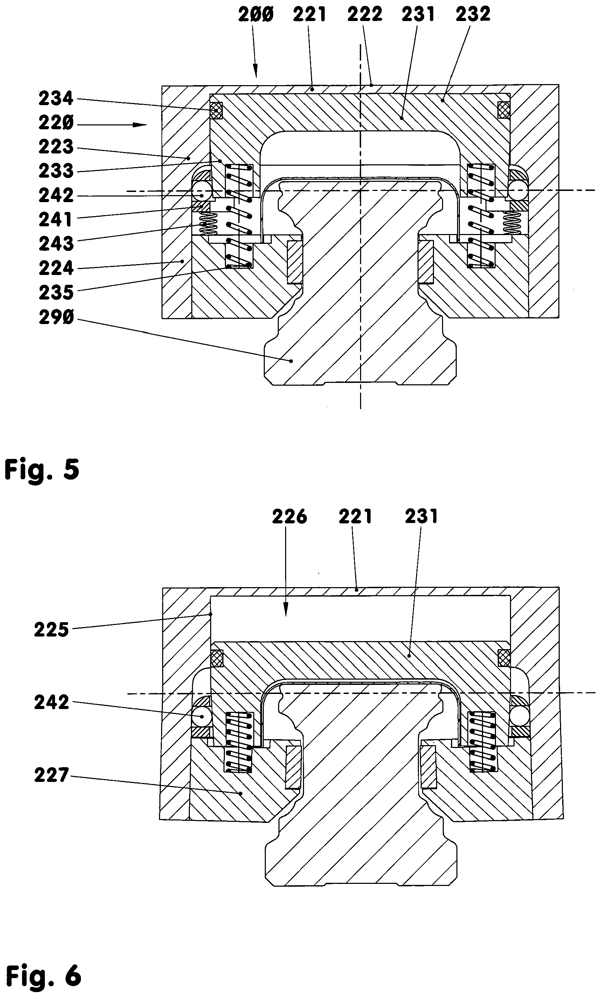

Die Figur 3 zeigt den Schaltplan einer pneumatischen Einheit (9) mit zwei pneumatisch betätigten Vorrichtungen (200). Letztere sind als Brems- und/oder Klemmvorrichtungen (220) in der Bauform von Linearklemmvorrichtungen (220) ausgebildet. Die Figuren 5 und 6 zeigen eine derartige Linearklemmvorrichtung (220) in den zwei Betriebsstellungen.

Die Linearklemmvorrichtung (220) umgreift eine stabförmige Führungsschiene (290). Für den Umgriff hat die Linearklemmvorrichtung (220) einen C-förmig ausgebildeten Grundkörper (221).

Der Grundkörper (221) weist einen z.B. quaderförmigen Zylinderabschnitt (222), zwei Federgelenkabschnitte (223) und zwei Reibbackenabschnitte (224) auf. Der Zylinderabschnitt (222) hat z.B. zwei in der Längsrichtung zueinander versetze Ausnehmungen (225). Die beiden Ausnehmungen (225) haben beispielsweise identische geometrische Abmessungen. Diese Ausnehmungen (225) begrenzen Druckräume (226) der Linearklemmvorrichtung (220).

An den Zylinderabschnitt (222) schließt sich beidseits der Federgelenkabschnitt (223) an. Der einzelne Federgelenkabschnitt (223) bildet einen elastischen Biegebalken.

An den einzelnen Federgelenkabschnitt (223) schließt jeweils ein Reibbackenabschnitt (224) an. Letzterer dient als Träger für die an ihm angeschraubten Reibbacken (227).

In jeder der Ausnehmungen (225) ist ein Pneumatikkolben (231) abgedichtet geführt. Der Pneumatikkolben (231) begrenzt den Druckraum (226) in Richtung der Führungsschiene (290). Der Pneumatikkolben (231) besteht aus einer Kolbenplatte (232) und aus zwei von dieser abstehenden Schiebekeilen (233). Die Kolbenplatte (232) hat eine Ringnut, in der ein Kolbendichtring (234) sitzt. In jedem der Schiebekeile (233) ist ein Rückholfederelement (235) eingesetzt.

Der Grundkörper (221), der Pneumatikkolben (231) und die Reibbacke (227) umschließen im Bereich des jeweiligen Federgelenkabschnittes (223) einen Wälzkörperkäfig (241). Jeder Wälzkörperkäfig (241) führt beispielsweise als Wälzkörper zwei Zylinderrollen (242) oder Nadeln. Seitlich der Zylinderrollen (242) nehmen die Wälzkörperkäfige (241) je eine an der nächstgelegenen Reibbacke (227) abstützende Schraubendruckfeder (243) auf.

Die Darstellung der Figur 5 zeigt die Linearklemmvorrichtung (220) in der geschlossenen Stellung. Der Pneumatikkolben (231) wird durch die Rückholfederelemente (235) dort gehalten. Ebenso sichern die Schraubendruckfedern (243) die obere Position des jeweiligen Wälzkörperkäfigs (241). In diesem Betriebszustand ist die Linearklemmvorrichtung (220) an der Führungsschiene (290) festgeklemmt. Der Federgelenkabschnitt (223) bringt die hierfür erforderliche Klemmkraft auf.

Beim Betrieb der Brems- und/oder Klemmvorrichtung (220) verbindet jeweils eine Verbindungsleitung (150) die pneumatische Betätigungsvorrichtung (10) mit jeweils einem Druckraum (226) der Linearklemmvorrichtung (220). Der Hauptschalter (21) der Betätigungsvorrichtung (10) ist eingeschaltet, die Ventilschalter (41, 51; 44, 54) sind bei klemmender Brems- und/oder Klemmvorrichtung (220) geöffnet. Die Wegeventile (42, 52) stehen in einer Sperrstellung. In der Sperrstellung des jeweiligen Wegeventils (42; 52) besteht keine pneumatische Verbindung zwischen der Druckseite (64) des Verdichters (63) und dem jeweils zugeordneten Druckausgang (31; 32) des Gehäuses (11). Im Ausführungsbeispiel ist sowohl am ersten Druckausgang (31) als auch am zweiten Druckausgang (32) der Betätigungsvorrichtung (10) jeweils eine Verbindungsleitung (150) angeschlossen.

Um die Brems- und/oder Klemmvorrichtung (220) zu lüften, werden beispielsweise zwei Ventilschalter (41, 51; 44, 54) der pneumatischen Betätigungsvorrichtung (10) geschlossen. Das Schließen der Ventilschalter (41, 51; 44, 54) kann beispielsweise von der übergeordneten Steuerung oder der Rechner- und Speichereinheit (101) aus erfolgen. Die Magnetspule (43; 53) des jeweiligen Wegeventils (42; 52) wird bestromt. Das Wegeventil (42; 52) wird entgegen der Kraft der jeweiligen Ventilfeder (45; 55) in die Betriebsstellung geöffnet. Beim Anschluss nur einer Verbindungsleitung (150) an die pneumatische Betätigungsvorrichtung (10), wird nur der jeweils zugehörige Ventilschalter (41; 44; 51; 54) betätigt.

Mit dem Öffnen des Wegeventils (42; 52) entspannt sich die Druckluft aus der Druckleitung (65) in die Verbindungsleitung (150). Beispielsweise ist das Innenvolumen der Verbindungsleitung (150) größer als das Innenvolumen der Druckleitung (65). Der mittels des Druckschalters (71) überwachte Druck nimmt ab. Sobald der Druck auf einen Wert unterhalb des Druckwertes des unteren Schaltpunkts gefallen ist, wird der elektrische Motor (62) eingeschaltet. Mittels des Verdichters (63) wird der Druck der Luft im pneumatischen System (151) erhöht. In der Brems- und/oder Klemmvorrichtung (220) wird der Pneumatikkolben (231) entgegen der Rückstellkraft der Rückstellfedern (235, 243) in den Darstellungen der Figuren 5 und 6 unter Vergrößerung des Druckraums (226) nach unten verschoben. Die Zylinderrollen (242) wälzen nach unten und spreizen die Reibbackenabschnitte (224) nach außen. Sobald der Pneumatikkolben (231) seine untere Endlage erreicht hat, befinden sich auch die Zylinderrollen (242) mit den Wälzkörperkäfigen (241) in ihrer unteren Endlage. Die Reibbacken (227) haben keinen Kontakt mehr zu der Führungsschiene (290), vgl. Figur 6. Das Lüftspiel beträgt beispielsweise mehrere Zehntel Millimeter. Das Volumen des einzelnen Druckraums (226) ist in diesem Zustand z.B. mindestens zehnmal so groß wie das Volumen der Druckleitung (65).

Sobald im gesamten pneumatischen System (151) der am Druckschalter (71) ermittelte Druck auf den Wert des oberen Schaltpunkts erhöht ist, wird der Motor (62) abgeschaltet. Die Führungsschiene (290) kann jetzt relativ zur Brems- und/oder Klemmvorrichtung (220) in der Längsrichtung verschoben werden.

Um die Brems- und/oder Klemmvorrichtung (220) wieder zu schließen, wird der zugeordnete Ventilschalter (41; 44; 51; 54) geöffnet. Die Bestromung der Magnetspule (43; 53) wird abgeschaltet. Das Wegeventil (42; 52) wird mittels der Ventilfeder (45; 55) in die Sperrstellung geschaltet. Die Verbindungsleitung (150) wird mit dem Entlüftungsausgang (35) verbunden. Der Druck im Druckraum (226) und in der Verbindungsleitung (150) wird auf den Umgebungsdruck vermindert. In der Brems- und/oder Klemmvorrichtung (220) verschieben die Rückstellfedern (235, 243) den Pneumatikkolben (231) in die Ausgangslage. Der Grundkörper (221) verformt sich in seine Ausgangsstellung zurück. Die Führungsschiene (290) wird geklemmt. Die Ansprechzeit der Pneumatikeinheit (9) beim Klemmen ist im Ausführungsbeispiel kürzer als die Ansprechzeit beim Lüften der Klemmung. Beispielsweise ist ab der Betätigung des Ventilschalters (41; 44; 51; 54) das Zeitintervall für die Lüftbewegung der Brems- und/oder Klemmvorrichtung (220) mehr als doppelt so lang als Zeitintervall für das Klemmen der Brems- und/oder Klemmvorrichtung (220).

Sollte beispielsweise eine Leckage des pneumatischen Systems (151) auftreten, erfolgt der Druckaufbau im pneumatischen System (151) nicht innerhalb eines vorgesehenen Zeitintervalls. Die Verdichtereinheit (61) wird weiterbetrieben. Gegebenenfalls kann eine Warnmeldung ausgegeben werden. Übersteigt die mittels des Temperaturschalters (75) ermittelte Temperatur den vorgegebenen Grenzwert, wird der elektrische Motor (62) abgeschaltet.

Die Figur 7 zeigt eine Pneumatikeinheit (9) mit einer pneumatischen Betätigungsvorrichtung (10) und mit einer pneumatisch betätigten Vorrichtung (200) in der Bauform eines Spannsystems (320). Die pneumatische Betätigungsvorrichtung (10) ist beispielsweise so aufgebaut wie im Zusammenhang mit dem ersten Ausführungsbeispiel beschrieben. An den dritten Druckausgang (33) des Gehäuses (11) kann ein - hier mit dünnen Linien dargestellter - außenliegender Druckspeicher (121) angeschlossen werden.

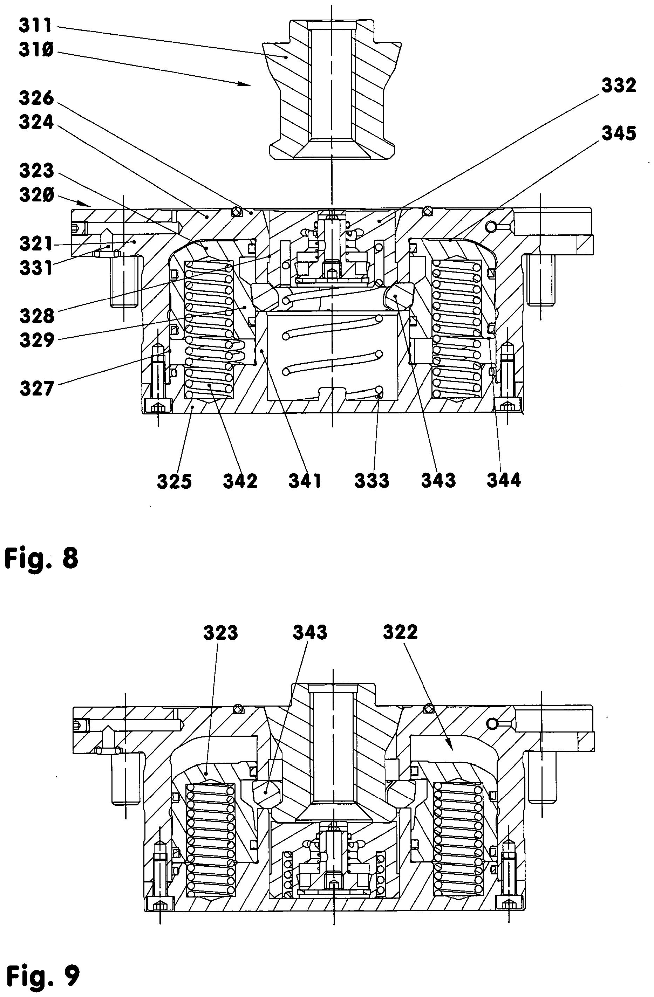

Das in der Schaltung der Figur 7 eingesetzte Spannsystem (310) ist beispielsweise ein Nullpunkt-Spannsystem (310). Derartige Spannsysteme (310) werden eingesetzt zum Fixieren von Werkstücken auf Werkstücktischen. Die Figuren 8 und 9 zeigen den Aufbau eines derartigen Spannsystems (310).

Das Spannsystem (310) besteht aus einer Spannvorrichtung (320) und aus einem Kombibolzen (311). Die Spannvorrichtung (320) ist zur Aufnahme eines Werkstücks beispielsweise in einem Maschinentisch integriert. An dem zu spannenden Werkstück ist in der Regel mindestens ein Kombibolzen (311) befestigt. Die Spannvorrichtung (320) weist eine Mechanik auf, die den Kombibolzen (311) wiederholgenau in der Spannvorrichtung (320) positioniert.

Die Spannvorrichtung (320) hat ein Spannvorrichtungsgehäuse (321), das im Wesentlichen aus einem flanschartigen Gehäusegrundkörper (324) und einem in der Unterseite des Gehäusegrundkörpers (324) sitzenden Gehäusedeckel (325) besteht. Der einteilige Gehäusegrundkörper (324) setzt sich aus einer Flanschplatte (326) und einem daran angeformten Zylinder (327) zusammen.

Die Flanschplatte (326) weist in den Darstellungen der Figuren 8 und 9 auf der linken Seite ein Kanalsystem (331) auf, über das ggf. ein zwischen der Flanschplatte (326) und dem aufliegenden Werkstück vorhandener Staudruck zur Kontrolle einer korrekten Werkstückauflage einem Messgerät zuführbar ist. Die Luftzufuhr kann mittels der Betätigungsvorrichtung (10) erfolgen.

Die Flanschplatte (326) hat im Zentrum eine zentrale Aufnahmeausnehmung (328), die von einem an der Flanschplatte (326) angeformten Stützrohr (329) ummantelt ist. Dieses Stützrohr (329) dient der Innenführung des Ringkolbens (323).

Der Gehäusedeckel (325) sitzt zentriert und abgedichtet im Gehäusegrundkörper (324). Er weist im Zentrum ein in den Gehäusegrundkörper (324) hineinragendes Anschlagrohr (341) auf. Die Außenwandung des Anschlagrohrs (341) führt ebenfalls den Ringkolben. Weiterhin nimmt der Gehäusedeckel (325) z.B. zwölf Schraubendruckfedern (342) aus. Zwischen den Stirnflächen des Stützrohrs (329) und des Anschlagrohrs (341) ist ein Spannring (343) angeordnet.

In der Darstellung der Figur 8 befindet sich die Spannvorrichtung (320) drucklos in ihrem unbetätigten Ausgangszustand. Eine Verschlusskappe (332) sitzt in ihrer Schließposition. Zugleich liegt der Ringkolben (323) aufgrund der Wirkung der Schraubendruckfedern (342) am Boden des Zylinders (327) an. Der Spannring (343) kontaktiert den Ringkolben (323).

Zur Betätigung der Spannvorrichtung (320) wird am rückwärtigen Kolbenboden (344) des Ringkolbens (323) mittels der Betätigungsvorrichtung (10) pneumatische Druck angelegt. Die Stirnseite der Verschlusskappe (332) und des aufzunehmenden Kombibolzens (311) werden mit Druckluft gereinigt.

Der an der Ringkolbenfrontseite (345) anliegende pneumatische Druck verschiebt den Ringkolben (323) unter einem Spannen der Schraubendruckfedern (342) auf dem Gehäusedeckel (325). Der Druckraum (322) wird vergrößert. Beim weiteren Einschieben des Kombibolzens (311) drückt dieser den Spannring (343) in den Ringkolben (323).

In der Darstellung der Figur 9 ist der Kombibolzen (311) an der der Flanschplatte (326) zur Anlage gekommen. Der Spannring (343) hat sich in seine Ausgangslage zusammengezogen.

Das Lösen des Kombibolzens (311) erfolgt im Wesentlichen in umgekehrter Reihenfolge. Der Ringkolben (323) wird mit Druckluft gegen den Gehäusedeckel (325) gepresst, wodurch der Spannring (343) beim Herausziehen des Kombibolzens (311) in Richtung des Ringkolbens (323) verdrängt wird. Auch die für das Lösen des Kombibolzens (311) erforderliche Druckluft wird mittels der pneumatischen Betätigungsvorrichtung (10) bereitgestellt.

Die Figur 10 zeigt einen Schaltplan einer weiteren Ausführungsform einer pneumatischen Einheit (9). Die pneumatische Betätigungsvorrichtung (10) ist weitgehend so ausgebildet, wie im Zusammenhang mit den vorigen Ausführungsbeispielen beschrieben. Die beiden Wegeventile (42; 52) sind elektrisch nicht angeschlossen. Die jeweiligen Druckausgänge (31, 32) sind verschlossen. An den dritten Druckausgang (33) ist ein außenliegender Druckspeicher (121) angeschlossen. Diesem Druckspeicher (121) ist ein außenliegendes pneumatisches Wegeventil (122) nachgeschaltet. Dieses Wegeventil (122) kann beispielsweise so aufgebaut sein wie eines der innerhalb des Gehäuses (11) angeordneten Wegeventile (42; 52). Der Druckspeicher (121) und das Wegeventil (122) können z.B. unmittelbar am Verbraucher angeordnet sein. Die elektrische Ansteuerung und/oder die Betätigung dieses außenliegenden Wegeventils (122) erfolgt beispielsweise verbraucherseitig, mittels der Maschinensteuerung, etc.

Die dargestellte pneumatisch betätigte Vorrichtung (200) hat eine einfachwirkende Zylinder-Kolben-Einheit (420) mit einer Federrückstellung. In einem Zylinder (421) trennt ein verschiebbarer Kolben (422) einen Verdrängungsraum (423) von einem Ausgleichsraum (424). Am Verdrängungsraum (423) ist die Verbindungsleitung (150) angeschlossen. Der Ausgleichsraum (424) ist mit der Umgebung (1) verbunden. Im Ausgleichsraum (424) ist eine Rückstellfeder (425) in der Bauform einer Schraubendruckfeder angeordnet, die den Kolben (422) belastet. Bei einer Druckbeaufschlagung des Verdrängungsraums (423) wird der Kolben (422) unter Belastung der Rückstellfeder (425) in Richtung des Ausgleichsraums (424) verschoben. Die am Kolben (422) befestigte Kolbenstange (426) wird ausgefahren. Sobald das Wegeventil (122) in die Sperrstellung geschaltet wird, wird der Verdrängungsraum (423) über das Wegeventil (122) entlastet. Der Kolben (422) wird mittels der Rückstellfeder (425) in Richtung des Verdrängungsraums (423) verschoben.

In der Figur 11 ist eine weitere Variante einer pneumatischen Einheit (9) dargestellt. Die pneumatisch betätigte Vorrichtung (200) entspricht beispielsweise der im Zusammenhang mit dem Ausführungsbeispiel der Figuren 1 - 6 dargestellten pneumatisch betätigten Vorrichtung (200).

Die in dieser Figur 11 dargestellte pneumatische Betätigungsvorrichtung (10) hat keine außenliegenden Ventilschalter (41, 42). Die innenliegenden Ventilschalter (44, 54) dieses Ausführungsbeispiels werden mittels der Rechner- und Speichereinheit (101) betätigt, wie oben beschrieben. Das Gehäuse (11) hat beispielsweise sowohl eine Datenanschlussmuffe (28) als auch eine Signalanschlussmuffe (29). Innerhalb des Gehäuses (11) ist die Datenanschlussmuffe (28) mit dem Datenanschluss (87) der Steuerungsbaugruppe (81), vgl. Figur 4, verbunden. Die Signalanschlussmuffe (29) ist mit dem Signalanschluss (88) der Steuerungsbaugruppe (81) verbunden. Die Betätigung der pneumatischen Einheit (9) erfolgt, wie oben beschrieben.

Auch Kombinationen der einzelnen Ausführungsbeispiele sind denkbar.

### Bezugszeichenliste:

- 1: Umgebung
- 9: pneumatische Einheit

- 10: pneumatische Betätigungsvorrichtung
- 11: Gehäuse
- 12: Bodenteil
- 13: Deckelteil
- 14: Ecke von (12)
- 15: Gewindebohrung
- 16: Rückseite

- 21: Hauptschalter, Bedienungselement
- 22: Anschlussschiene
- 23: Potentialanschluss, elektrischer Anschluss
- 24: Massenanschluss, elektrischer Anschluss
- 25: Potentialausgangsanschluss
- 26: Ventilschaltanschluss
- 27: Ventilschaltanschluss
- 28: Datenanschlussmuffe
- 29: Signalanschlussmuffe

- 31: Druckausgang, erster Druckausgang
- 32: Druckausgang, zweiter Druckausgang
- 33: Druckausgang, dritter Druckausgang
- 34: Verschlusselement
- 35: Entlüftungsausgang
- 36: Schutzfilter
- 37: Ansauganschluss
- 38: Ansaugfilter

- 41: Ventilschalter, erster Ventilschalter
- 42: Wegeventil, erstes Wegeventil
- 43: Ventilspule, Magnetspule
- 44: Ventilschalter, innerer erster Ventilschalter
- 45: Ventilfeder

- 51: Ventilschalter, zweiter Ventilschalter
- 52: Wegeventil, zweites Wegeventil
- 53: Ventilspule, Magnetspule
- 54: Ventilschalter, innerer zweiter Ventilschalter
- 55: Ventilfeder

- 61: Verdichtereinheit
- 62: elektrischer Motor
- 63: Verdichter
- 64: Druckseite
- 65: pneumatische Leitung, Druckleitung
- 66: Verdichtergehäuse

- 71: Druckschalter

- 75: Temperaturschalter

- 81: Steuerungsbaugruppe
- 82: erster Anschluss, Potentialeingangsanschluss
- 83: zweiter Anschluss, Masseanschluss
- 84: dritter Anschluss
- 85: vierter Anschluss
- 86: fünfter Anschluss
- 87: sechster Anschluss, Datenanschluss
- 88: siebter Anschluss, Signalanschluss
- 89: achter Anschluss, Reserveanschluss

- 91: neunter Anschluss, zweiter Ventilanschluss
- 92: zehnter Anschluss, erster Ventilanschluss
- 93: elfter Anschluss, Eingangsanschluss
- 94: zwölfter Anschluss, Betriebsanschluss
- 95: dreizehnter Anschluss, Datenanschluss
- 96: vierzehnter Anschluss
- 97: fünfzehnter Anschluss
- 98: sechzehnter Anschluss, Motorsteueranschluss
- 99: Motorsteuerkreis

- 101: Rechner- und Speichereinheit
- 102: Speicher
- 103: elektrische Verbindung zwischen (82) und (98)
- 104: Dreifachschalter
- 105: Schaltelement von (104), erstes Schaltelement
- 106: Schaltelement von (104), zweites Schaltelement
- 107: Schaltelement von (104), drittes Schaltelement
- 108: Signalleitung
- 109: Diodenbrücke

- 111: Leitungsbrücke
- 112: Ventilschaltleitung
- 113: Motorsteuerleitung

- 121: Druckspeicher, außenliegend
- 122: pneumatisches Wegeventil, außenliegend

- 150: Verbindungsleitung
- 151: pneumatisches System

- 200: pneumatisch betätigte Vorrichtung

- 220: Brems- und/oder Klemmvorrichtung, Linearklemmvorrichtung
- 221: Grundkörper
- 222: Zylinderabschnitt
- 223: Federgelenkabschnitte
- 224: Reibbackenabschnitte
- 225: Ausnehmungen
- 226: Druckräume
- 227: Reibbacken

- 231: Pneumatikkolben
- 232: Kolbenplatte
- 233: Schiebekeile
- 234: Kolbendichtring
- 235: Rückholfederelement

- 241: Wälzkörperkäfig
- 242: Zylinderrollen
- 243: Schraubendruckfeder, Rückstellfeder

- 290: Führungsschiene

- 310: Spannsystem
- 311: Kombibolzen

- 320: Spannvorrichtung
- 321: Spannvorrichtungsgehäuse
- 322: Druckraum
- 323: Ringkolben
- 324: Gehäusegrundkörper
- 325: Gehäusedeckel
- 326: Flanschplatte
- 327: Zylinder
- 328: Aufnahmeausnehmung
- 329: Stützrohr

- 331: Kanalsystem
- 332: Verschlusskappe
- 333: Querbohrung
- 341: Anschlagrohr
- 342: Schraubendruckfedern
- 343: Spannring
- 344: Kolbenboden
- 345: Ringkolbenfrontseite

- 420: Zylinder-Kolben-Einheit
- 421: Zylinder
- 422: Kolben
- 423: Verdrängungsraum, Druckraum
- 424: Ausgleichsraum
- 425: Rückstellfeder
- 426: Kolbenstange

- µC: Mikrocontroller
- PLD: Programmierbarer Logik-Baustein

## Patentansprüche

1. Pneumatische Betätigungsvorrichtung (10) für pneumatisch betätigte Vorrichtungen (200),
- wobei eine Steuerungsbaugruppe (81) zumindest mittels eines Druckschalters (71) und eines mit diesem elektrisch in Reihe geschalteten Temperaturschalters (75) einen, einen Verdichter (63) antreibenden elektrischen Motor (62) steuert,
- wobei mindestens ein, mittels eines in oder an der Steuerungsbaugruppe (81) angeordneten Ventilschalters (41; 44; 51; 54) schaltbares Wegeventil (42; 52) mit einer federbelasteten Sperrstellung elektromagnetisch betätigbar ist,
- wobei das Volumen einer Druckleitung (65) zwischen dem Verdichter (63) und dem Wegeventil (42; 52) kleiner ist als 500 Kubikmillimeter.

2. Pneumatische Betätigungsvorrichtung (10) nach Anspruch 1, **dadurch gekennzeichnet, dass** zumindest die Steuerungsbaugruppe (81), der Druckschalter (71), der Temperaturschalter (75), der elektrische Motor (62), der Verdichter (63) und das Wegeventil (42; 52) in einem gemeinsamen Gehäuse (11) angeordnet sind.

3. Pneumatische Betätigungsvorrichtung (10) nach Anspruch 1, **dadurch gekennzeichnet, dass** der Druckschalter (71) eine Hysterese mit einem einstellbaren oberen Schaltpunkt und/oder einem einstellbaren unteren Schaltpunkt aufweist.

4. Pneumatische Betätigungsvorrichtung (10) nach Anspruch 1, **dadurch gekennzeichnet, dass** die Steuerungsbaugruppe (81) eine Rechner- und Speichereinheit (101) aufweist.

5. Pneumatische Betätigungsvorrichtung (10) nach Anspruch 4, **dadurch gekennzeichnet, dass** in der Rechner- und Speichereinheit (101) eine Vielzahl von Ablaufprogrammen speicherbar ist, die als Parameter jeweils zumindest eine Motorstromkurve, einen Druckwert für den oberen Schaltpunkt des Druckschalters (71), einen Druckwert für den unteren Schaltpunkt des Druckschalters (71) und einen Grenztemperaturwert für den Temperaturschalter (75) enthalten.

6. Pneumatische Betätigungsvorrichtung (10) nach Anspruch 1, **dadurch gekennzeichnet, dass** innerhalb des Gehäuses (11) mindestens zwei pneumatisch parallel zueinander geschaltete pneumatische Wegeventile (42, 52) angeordnet sind, wobei jedem pneumatischen Wegeventil (42; 52) zumindest ein Ventilschalter (41; 44; 51; 54) und ein Druckausgang (31; 32) zugeordnet ist.

7. Pneumatische Betätigungsvorrichtung (10) nach Anspruch 6, **dadurch gekennzeichnet, dass** die Ventilschalter (44, 54) innerhalb des Gehäuses (11) angeordnet sind und mittels der Steuerungsbaugruppe (81) zeitlich nacheinander schaltbar sind.

8. Pneumatische Betätigungsvorrichtung (10) nach Anspruch 1, **dadurch gekennzeichnet, dass** der Druckschalter (71) und der Ventilschalter (41; 44; 51; 54) elektrisch parallel zueinander einem Hauptschalter (21) und einem Potentialeingangsanschluss (82) der Steuerungsbaugruppe (81) nachgeschaltet sind.

9. Pneumatische Betätigungsvorrichtung (10) nach Anspruch 1, **dadurch gekennzeichnet, dass** sie einen ventillosen Druckausgang (33) hat, der dem Verdichter (63) pneumatisch nachgeschaltet ist.

10. Pneumatische Einheit (9) mit einer pneumatischen Betätigungsvorrichtung (10) nach Anspruch 1 und mit einer pneumatisch betätigten Vorrichtung (200), die mindestens einen Druckraum (226; 322; 423) aufweist, **dadurch gekennzeichnet,**
- **dass** jeder Druckraum (226; 322; 423) mittels eines Kolbens (231; 323; 422) begrenzt ist,
- **dass** mindestens ein Druckausgang (31; 32) der Betätigungsvorrichtung (10) und mindestens ein Druckraum (226; 322; 423) mittels einer Verbindungsleitung (150) verbunden sind und
- **dass** die Summe der Volumina der Verbindungsleitung (150) und mindestens eines Druckraums (226; 322; 423) größer ist als das Zehnfache des Volumens der Druckleitung (65).

## Claims

1. A pneumatic actuator (10) for pneumatically operated devices (200),
- wherein a control module (81) controls an electric motor (62), which drives a compressor (63), at least by means of a pressure switch (71) and a temperature switch (75) electrically series-connected thereto,
- wherein at least one directional valve (42; 52) can be operated electromagnetically, which can be switched by means of a valve switch (41; 44; 51; 54) arranged in or on the control module (81) and has a spring-loaded blocking position,
- wherein the volume of a pressure line (65) between the compressor (63) and the directional valve (42; 52) is less than 500 cubic millimetres.

2. The pneumatic actuator (10) according to Claim 1, **characterised in that** at least the control module (81), the pressure switch (71), the temperature switch (75), the electric motor (62), the compressor (63) and the directional valve (42; 52) are arranged in a common housing (11).

3. The pneumatic actuator (10) according to Claim 1, **characterised in that** the pressure switch (71) has a hysteresis with a settable upper switch point and/or a settable lower switch point.

4. The pneumatic actuator (10) according to Claim 1, **characterised in that** the control module (81) has a computer and memory unit (101).

5. The pneumatic actuator (10) according to Claim 4, **characterised in that** a plurality of sequence programs can be stored in the computer and memory unit (101), which each contain, as parameters, at least one motor current curve, a pressure value for the upper switch point of the pressure switch (71), a pressure value for the lower switch point of the pressure switch (71), and a limit temperature value for the temperature switch (75) .

6. The pneumatic actuator (10) according to Claim 1, **characterised in that** at least two pneumatically parallel-connected pneumatic directional valves (42, 52) are arranged inside the housing (11), wherein each pneumatic directional valve (42; 52) is assigned at least one valve switch (41; 44; 51; 54) and a pressure output (31; 32).

7. The pneumatic actuator (10) according to Claim 6, **characterised in that** the valve switches (44, 54) are arranged inside the housing (11) and can be switched consecutively by means of the control module (81).

8. The pneumatic actuator (10) according to Claim 1, **characterised in that** the pressure switch (71) and the valve switch (41; 44; 51; 54) are connected electrically parallel to one another downstream of a main switch (21) and a potential input terminal (82) of the control module (81).

9. The pneumatic actuator (10) according to Claim 1, **characterised in that** it has a valveless pressure output (33), which is pneumatically connected downstream of the compressor (63).

10. A pneumatic unit (9) having a pneumatic actuator (10) according to Claim 1 and having a pneumatically operated device (200) that has at least one pressure chamber (226; 322; 423), **characterised in that**
- each pressure chamber (226; 322; 423) is delimited by means of a piston (231; 323; 422),
- at least one pressure output (31; 32) of the actuator (10) and at least one pressure chamber (226; 322; 423) are connected by means of a connecting line (150), and
- the sum of the volumes of the connecting line (150) and at least one pressure chamber (226; 322; 423) is greater than ten times the volume of the pressure line (65).

## Revendications

1. Dispositif d'actionnement (10) pneumatique, destiné à des dispositifs (200) actionnés par voie pneumatique,
- un ensemble de commande (81) commandant au moins au moyen d'un pressostat (71) et d'un interrupteur thermostatique (75), monté en série avec celui-ci un moteur (62) électrique entraînant un compresseur (63),
- au moins un distributeur (42 ; 52) commutable au moyen d'un commutateur de soupape (41 ; 44 ; 51 ; 54), placé dans ou sur l'ensemble de commande (81) étant actionnable par voie électromagnétique avec une position de blocage contrainte par ressort,
- le volume d'une conduite sous pression (65) entre le compresseur (63) et le distributeur (42 ; 52) étant inférieur à 500 millimètres cube.

2. Dispositif d'actionnement (10) pneumatique selon la revendication 1, **caractérisé en ce qu'**au moins l'ensemble de commande (81), le pressostat (71), l'interrupteur thermostatique (75), le moteur (62) électrique, le compresseur (63) et le distributeur (42 ; 52) sont placés dans un carter (11) commun.

3. Dispositif d'actionnement (10) pneumatique selon la revendication 1, **caractérisé en ce que** le pressostat (71) fait preuve d'une hystérèse avec un point de commutation supérieur réglable et / ou un point de commutation inférieur réglable.

4. Dispositif d'actionnement (10) pneumatique selon la revendication 1, **caractérisé en ce que** l'ensemble de commande (81) comporte une unité de calcul et de mémoire (101) .

5. Dispositif d'actionnement (10) pneumatique selon la revendication 4, **caractérisé en ce que** dans l'unité de calcul et de mémoire (101) peut se mémoriser une pluralité de programmes séquentiels, dont chacun contient en tant que paramètres au moins une courbe de courant moteur, une valeur de pression pour le point de commutation supérieur du pressostat (71), une valeur de pression pour le point de commutation inférieur du pressostat (71) et une valeur de température limite pour l'interrupteur thermique (75).

6. Dispositif d'actionnement (10) pneumatique selon la revendication 1, **caractérisé en ce qu'**à l'intérieur du carter (11) sont placés au moins deux distributeurs (42, 52) pneumatiques, montés en parallèle l'un par rapport à l'autre, à chaque distributeur (42 ; 52) pneumatique étant associés au moins un commutateur de soupape (41 ; 44 ; 51 ; 54) et une sortie de pression (31 ; 32).

7. Dispositif d'actionnement (10) pneumatique selon la revendication 6, **caractérisé en ce que** les commutateurs de soupape (44, 54) sont placés à l'intérieur du carter (11) et sont commutables de manière successive dans la temps au moyen de l'ensemble de commande (81).

8. Dispositif d'actionnement (10) pneumatique selon la revendication 1, **caractérisé en ce que** le pressostat (71) et le commutateur de soupape (41 ; 44 ; 51 ; 54) sont montés électriquement, en parallèle l'un par rapport à l'autre en aval d'un interrupteur principal (21) et d'une borne d'entrée (82) de potentiel de l'ensemble de commande (81).

9. Dispositif d'actionnement (10) pneumatique selon la revendication 1, **caractérisé en ce qu'**il détient une sortie de pression (33) sans soupape, qui par voie pneumatique, est montée en aval du compresseur (63).

10. Unité pneumatique (9), pourvue d'un dispositif d'actionnement (10) pneumatique selon la revendication 1 et d'un dispositif (200) actionné par voie pneumatique, qui comporte au moins une chambre de pression (226 ; 322 ; 423) **caractérisée**
- **en ce que** chaque chambre de pression (226 ; 322 ; 423) est délimitée au moyen d'un piston (231 ; 323 ; 422),
- **en ce qu'**au moins une sortie de pression (31 ; 32) du dispositif d'actionnement (10) et au moins une chambre de pression (226 ; 322 ; 423) sont assemblés au moyen d'une conduite de raccordement (150) et
- **en ce que** la somme des volumes de la conduite de raccordement (150) et d'au moins une chambre de pression (226 ; 322 ; 423) est supérieure à dix fois le volume de la conduite sous pression (65).
